# EUROPEAN PATENT SPECIFICATION

(11) **EP 2 844 915 B1**
(45) Date of publication and mention of the grant of the patent: **10.01.2018**
(21) Application number: 13719685.3
(22) Date of filing: 22.04.2013
(51) Int. Cl.: F21K 9/232, F21V 5/02, F21V 7/00, F21V 7/04, F21V 13/02, F21Y 115/10

(54) **REFLECTOR AND LAMP COMPRISED THEREOF**
REFLEKTOR UND LEUCHTE DAMIT
RÉFLECTEUR ET LAMPE LE COMPRENANT

(30) Priority: 04.05.2012 US 201261643056 P; 06.12.2012 US 201213706798
(43) Date of publication of application: 11.03.2015
(73) Proprietor: GE Lighting Solutions, LLC, East Cleveland, OH 44112 (US)
(72) Inventor: MAYER, Mark, J., East Cleveland, OH 44112 (US); KUENZLER, Glenn, Howard, East Cleveland, OH 44112 (US); CHINNIAH, Jeyachandrabose, East Cleveland, OH 44112 (US); YODER, Benjamin, Lee, East Cleveland, OH 44112 (US)
(74) Representative: Foster, Christopher Michael
(86) International application number: PCT/US2013/037556
(87) International publication number: WO 2013/165722

(56) References cited:
- EP-A1- 2 442 009
- WO-A1-2010/146518
- GB-A- 2 195 047
- JP-A- 2000 304 908
- JP-A- 2003 346 526
- US-A1- 2007 139 798
- US-A1- 2011 286 200
- US-A1- 2012 051 058
- US-A1- 2012 080 699

## Description

### BACKGROUND

### Technical Field

The subject matter of the present disclosure relates to lighting and lighting devices and, more particularly, to embodiments of a lamp that utilizes a directional light source and a reflector to generate an optical intensity distribution substantially similar to the optical intensity distribution of common incandescent lamps.

### Description of Related Art

Incandescent lamps (e.g., integral incandescent light bulbs and halogen light bulbs) mate with a lamp socket via a threaded base connector (i.e. an "Edison base" in the context of an incandescent light bulb), a bayonet-type base connector (i.e. bayonet base in the context of an incandescent light bulb), or other standard base connector. These incandescent lamps are often in the form of a unitary package that includes components to operate the lamps from a source of standard electrical power (e.g., 110 V and/02 220 V AC and/or 12 VDC and/or DC batteries). In the case of an incandescent lamp, the lamp comprises an incandescent filament operating at high temperature and radiating efficiently excess heat into the ambient. Moreover, the majority of incandescent lamps are naturally omni-directional light sources providing light with a substantially uniform optical intensity distribution (a "intensity distribution").

Energy efficient lighting technologies include solid-state lighting devices such as LEDs, lamps having LEDs as a light source (LED lamp), and other LED-based devices often have performance that is superior to incandescent lamps. US2007139798A1 discloses an optical assembly including a light emitting diode (LED) and a structured surface; the structured surface has a plurality of prismatic structures arranged radially with respect to a reference point, and is disposed relative to the LED such that the reference point is substantially aligned with a light emission axis of the LED. EP2442009A1 discloses a bulb-type LED lamp configured to diffuse light outward through a globe; the bulb-type LED lamp includes LED modules, each having a mounting substrate and LEDs mounted on the mounting substrate, and a base through which power is supplied to the LEDs for light emission. US2011286200A1 discloses an LED lamp comprising: a light transmitting globe/envelope having a plurality of fluorescent protrusions, fibers and/or grooves containing a phosphor; a light unit having a circuit board and one or more light emitting diode (LED/LEDs) mounted on the circuit board for emitting a short wavelength primary light for directing to the fluorescent protrusions, fibers and/or grooves to convert the primary light into visible secondary light. The superior performance of a solid-state lighting device can be quantified by its useful lifetime (e.g., its lumen maintenance and its reliability over time) and its higher efficacy as measured in Lumens per Electrical Watt (LPW)). For example, the lifetime of an incandescent lamp is typically in the range of 10 to 30 LPW as opposed to the efficacy of LED-based lamps being typically in the range of 40 to 100 LPW.

LED-based devices do have one significant disadvantage in some applications; namely, LED-based devices are highly unidirectional by nature. For example, common LED-based devices are flat and usually emit light from only one side of the device. Thus, although superior with respect to certain performance aspects, the intensity distribution of many commercially available LED lamps designed to be suitable alternative and/or replacement for incandescent lamps cannot replicate the intensity distribution of incandescent lamps in satisfactory manner or to a sufficient extent.

Another challenge related to solid-state lighting technologies is the need to find a way to dissipate heat adequately. For example, LED-based devices are highly sensitive to temperature variations with respect to the performance and reliability of the LED-based devices as compared to incandescent lamps containing incandescent or halogen filaments. This temperature sensitivity challenge is often addressed by placing a heat sink in contact with or in thermal contact with the LED-based device. Unfortunately, the heat sink, depending on the placement thereof, may block all or a portion of the light that the LED lamp emits, thus, may limit further the ability of the LED lamp to generate light with a more uniform optical intensity distribution. Moreover, physical constraints on lamps such as regulatory limits that define maximum dimensions for all lamp components, including light sources, limit further an ability to dissipate heat sufficiently and efficiently for LED-based lamps

Accordingly, a LED lamp that further encourages households and commercial establishments to convert from conventional incandescent lamps and to install more energy efficient lamps (e.g., LED lamps) is desirable. Consequently, a need exists for a lamp that more closely generates light with a uniform optical intensity distribution that is consistent with an incandescent lamp while delivering superior performance with respect to average lifespan of the lamp and to efficacy. Additionally, a need exists for a solid-state lighting device such as an LED lamp that dissipates heat effectively and efficiently without adversely affecting the uniformity of the optical intensity distribution of the LED lamp.

### BRIEF SUMMARY OF THE INVENTION

The present disclosure describes, in one embodiment, a lamp that comprises an envelope forming an interior volume and a reflector disposed in the interior volume. The reflector comprises a facet having a first end and a second end proximate, respectively, an outer peripheral edge and a center axis of the reflector. The facet has an exterior facet profile with a first face, a second face opposing the first face, and a facet edge disposed therebetween. In one example, the first face and the second face are configured to at least partially reflect light.

The present disclosure describes, in one embodiment, a lamp that comprises a light-emitting diode device with an optical axis and a reflector spaced apart from the light-emitting diode device. The reflector has a center axis aligned with the optical axis and comprises a plurality of facets disposed circumferentially about the center axis. The facets have an exterior facet profile with a first face, a second face opposing the first face, and a facet edge disposed therebetween. The lamp also comprises an envelope in surrounding relation to the reflector. The lamp further comprises a heat dissipating assembly with a heat dissipating element spaced apart from the outer surface of the envelope forming an air gap.

The present disclosure describes, in one embodiment, a reflector for use in a lamp. The reflector comprises a plurality of facets disposed circumferentially about a center axis that form an outer peripheral edge. The facets have an exterior facet profile with a first face, a second face opposing the first face, and a facet edge disposed therebetween. In one example, the exterior facet profile comprises a first profile proximate the outer peripheral edge of the reflector and a second profile proximate the center axis that is different from different from the first profile.

Other features and advantages of the disclosure will become apparent by reference to the following description taken in connection with the accompanying drawings.

### BRIEF DESCRIPTION OF THE DRAWINGS

Reference is now made briefly to the accompanying drawings, in which:
FIG. 1 depicts a schematic diagram of a side view of one exemplary embodiment of a lamp with a directional light source and a reflector that disperses light from the light source with uniform optical intensity;
FIG. 2 depicts a side view of another exemplary embodiment of a lamp with a directional light source, a reflector, and heat dissipating elements to achieve uniform optical intensity;
FIG. 3 depicts a perspective view an exemplary light diffusing assembly for use in the lamp of FIGS. 1 and 2;
FIG. 4 depicts a side, cross-section view of the exemplary diffuser of FIG. 3;
FIG. 5 depicts a perspective view of an exemplary reflector for use in the light diffusing assembly of FIGS. 3 and 4 and the lamps of FIGS. 1 and 2;
FIG. 6 depicts a top view of a single facet of the reflector of FIG. 5;
FIG. 7 depicts a front view of the single facet of the reflector taken at line 7-7 in FIG. 6;
FIG. 8 depicts a side, cross-section view of the single facet of the reflector taken at line 8-8 in FIG. 6 that illustrates one configuration of the exterior profile of the facet;
FIG. 9 depicts a cross-section view of reflector taken at line 9-9 in FIG. 5 that illustrates a first profile and a second profile of the exterior profile of the single facet;
FIG. 10 depicts an exemplary reflector for use in the light diffusing assembly of FIGS. 3 and 4 and the lamps of FIGS. 1 and 2 that has an upward conical shape;
FIG. 11 depicts an exemplary reflector for use in the light diffusing assembly of FIGS. 3 and 4 and the lamps of FIGS. 1 and 2 that has a downward conical shape;
FIG. 12 depicts an exemplary reflector for use in the light diffusing assembly of FIGS. 3 and 4 and the lamps of FIGS. 1 and 2 that has a conical shape with curved and/or curvilinear features;
FIG. 13 depicts a perspective view of an exploded assembly of an exemplary reflector for use in the light diffusing assembly of FIGS. 3 and 4 and the lamps of FIGS. 1 and 2 that has multiple-piece construction; and
FIG. 14 depicts a plot of an optical intensity distribution profile for an embodiment of a lamp such as the lamps of FIGS. 1 and 2.

Where applicable like reference characters designate identical or corresponding components and units throughout the several views, which are not to scale unless otherwise indicated.

### DETAILED DESCRIPTION OF THE INVENTION

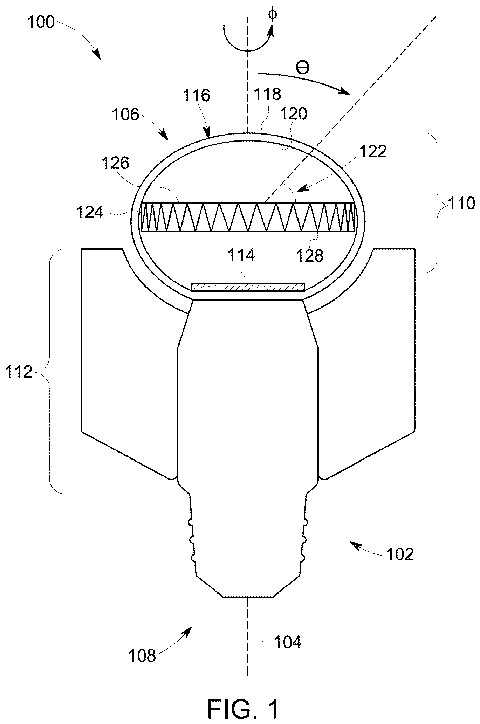

FIG. 1 illustrates an exemplary embodiment of a lamp 100. The lamp 100 comprises a base 102, a central axis 104, an upper pole 106, and a lower pole 108. The upper pole 106 and the lower pole 108 are located on the center axis 104 and define a spherical co-ordinate system that is useful to describe the spatial distribution of illumination and the intensity of such illumination that the lamp generates. The spherical co-ordinate system used in this description of the invention comprises an elevation or latitude co-ordinate θ and an azimuth or longitudinal co-ordinate Φ. For the purposes of the description below, the elevation or latitude co-ordinate θ shall be defined as being equal to zero degrees (0°) at the upper pole 106 on the central axis 104 and as being equal to one hundred eighty degrees (180°) at the lower pole 108 on the center axis 104.

The lamp 100 also comprises a light diffusing assembly 110, a heat dissipating assembly 112, and a light source 114 that is capable of generating light. The light diffusing assembly 110 includes an envelope 116 with an outer surface 118 and an inner surface 120 that surrounds an interior volume 122. The light diffusing assembly 110 also includes a reflector 124 located within the interior volume 122 of the envelope. The reflector 124 has a top 126 and a bottom 128, wherein light from the light source 114 enters the reflector 124 at the bottom 128.

Examples of the lamp 100 generate comfortable room lighting, e.g., similar to incandescent A-19 lamps. As set forth more below, the reflector 124 can include a plurality of facets disposed circumferentially about the central axis 104. These facets have geometry that reflect and/or diffuse light from the light source 114, thus enhancing the characteristics of illumination of the lamp 100. In one example, the facets form and/or reflect light in a manner consistent with a total internal reflection (TIR) lens and similar lossless reflective properties. As a reflector, light from the light source 114 strikes surfaces of the facets at such a steep angle with respect to the normal of the surface (or greater than a so-called critical angle for lens material) that the light cannot pass through the surface and instead reflects off these surfaces as if the surfaces were covered with a material that is reflective.

The outer surface 118 and the inner surface 120 of the envelope 116 are made from a light-transmissive material. In some examples, the light-transmissive material used to make the envelope 116 is selected from the group comprising glass, acrylic, diffusing polycarbonate, other commercially available diffusing polymers (e.g., Teijin ML5206, MAKROLON®), or any combination thereof. In other examples, the material that the envelope 116 comprises is inherently light-diffusive (e.g., opal glass) or can be made light-diffusive by means of a variety of methods such as frosting and/or texturizing the outer surface 118 and/or the inner surface 120 in order to increase light diffusion. In one example, the envelope 116 comprises a coating (not shown) such as enamel paint and/or other light-diffusive coating (available, for example, from General Electric Company, New York, USA). Suitable types of coatings are found on common incandescent and fluorescent light bulbs. In yet another example, manufacturing techniques may be deployed that embed light-scattering particles, fibers, and/or other light scattering media in the material that comprises the envelope 116.

At a relatively high level, use of the reflector 124 in embodiments of the lamp 100 generate light with a relative optical intensity distribution (or "optical intensity") at a level of approximately 100 ± 20 % over the range of values for the latitudinal co-ordinate θ between zero degrees (0°) and one hundred thirty-five degrees (135°) or greater, where 100 % corresponds to the average intensity over the range. In one embodiment, the lamp 100 maintains a relative optical intensity of 100 ± 20 % for values of the latitudinal co-ordinate of less than or approximately equal to one hundred fifty degrees (150°). These optical intensity distribution profiles comply with target values for optical intensity that the Department of Energy (DOE) sets for solid-state lighting devices as well as other applicable industry standards and ratings (e.g., ENERGY STAR®). The levels and distributions of optical intensity of the lamp 100 render the lamp 100 a suitable replacement for, or alternative to, conventional incandescent light bulb. Moreover, the physical characteristics and dimensions of the lamp 100 are substantially consistent with the physical profile of such common incandescent light bulbs, wherein the outer dimension defines boundaries within which the lamp 100 must fit. Examples of this outer boundary dimension meet one or more regulatory limits or standards (e.g., ANSI, NEMA, etc.). In one embodiment, the envelope 116 can be substantially hollow and have a curvilinear geometry (e.g., spherical, spheroidal, ellipsoidal, toroidial, ovoidal, and/or numerically generated freeform shape) that diffuses light.

The reflector 124 fits within the interior volume 122 of the envelope 116 in a position to intercept light emitted by the light source 114. As shown in FIG. 1, this position is spaced apart from the light source 114 and the upper, or top, part of the envelope 116. The amount of spacing may depend on construction of the reflector 124 as well other features and properties of the lamp 100. In one construction, the peripheral edge of the reflector 124 is secured to the inner surface 120 of the envelope 116 with an adhesive or an adhesive material. In other constructions, the inner surface 120 of the envelope 116 and the peripheral edge of the reflector 124 can comprise one or more complimentary mating elements (e.g., a boss and/or a ledge, a tongue, and/or a groove). The combination of these complimentary mating elements secures the reflector 124 in position. In another construction, the mating elements may form a snap-fit, a plastic weld joint, or have another mating configuration that prevents the reflector 124 from moving from the position (e.g., as shown in FIG. 1) to any significant extent.

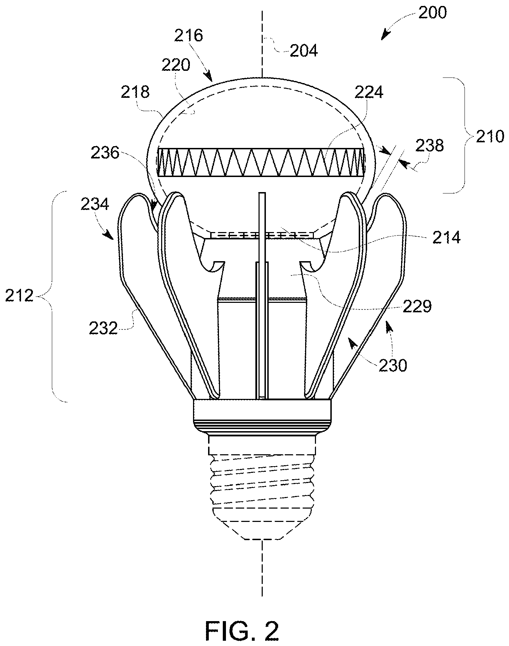

FIG. 2 depicts a side view of another exemplary embodiment of a lamp 200 with a central axis 204, a light diffusing assembly 210, a heat dissipating assembly 212, and a light source 214. The light diffusing assembly 210 has an envelope 216 with an outer surface 218 and an inner surface 220 in surrounding relation to a reflector 224. The light source 214 may include a solid-state device with one or more light-emitting elements such as light-emitting diode (LED) devices. The heat dissipating assembly 212 comprises a base element 229 in thermal contact with the light source 214 and at least one heat dissipating element 230 coupled to the base element 229. The heat dissipating element 230 promotes conduction, convection, and radiation of heat away from the light source 214. In one embodiment, the heat dissipating element 230 has a peripheral edge 232 that forms the outer periphery or shape of the heat dissipating elements 230. The peripheral edge 232 comprises an outer peripheral edge 234 and an inner peripheral edge 236 proximate the outer surface 218 of the envelope 216. A gap 238 separates the inner peripheral edge 236 of the periphery edge 232 of the heat dissipating element 230 from the outer surface 218 of the envelope 216. The gap 238 spaces the end of the heat dissipating elements 230 away from the outer surface 218 of the envelope 216, which facilitates airflow and convection currents to promote cooling and thermal dissipation of heat away from the lamp 200, while also improving the intensity distribution in the latitudinal direction.

In one exemplary embodiment, the light source 214 is a planar LED-based light source that emits light into a hemisphere having a Lambertian intensity distribution, compatible with the light diffusing assembly 210 for producing omni-directional illumination distribution. In one embodiment, the planar LED-based Lambertian light source includes a plurality of LED devices (e.g., LEDs 232) mounted on a circuit board (not shown), which is optionally a metal core printed circuit board (MCPCM). The LED devices may comprise different types of LEDs. In one embodiment, at least one of a first type of LED may be combined with at least one of a second type of LED, wherein the first and second types of LEDs have respective spectra and intensities that mix with each other in order to render white light of a desired color temperature and color rendering index (CRI). In one embodiment, the first type of LED output white light, which in one example has a greenish rendition (achievable, for example, by using a blue or violet emitting LED chip that is coated with a suitable "white" phosphor). The second type of LED output red and/or orange light (achievable, for example, using a GaAsP or AlGaInP or other epitaxy LED chip that naturally emits red and/or orange light). The light from the first type of LED and from the second type of LED blend together to produce improved color rendition. In another embodiment, the planar LED-based light source can also comprise a single LED or an array of LED emitters incorporated into a single LED device, which may be a white LED device and/or a saturated color LED device and/or so forth. In another embodiment, the LED emitter is an organic LED comprising, in one example, organic compounds that emit light.

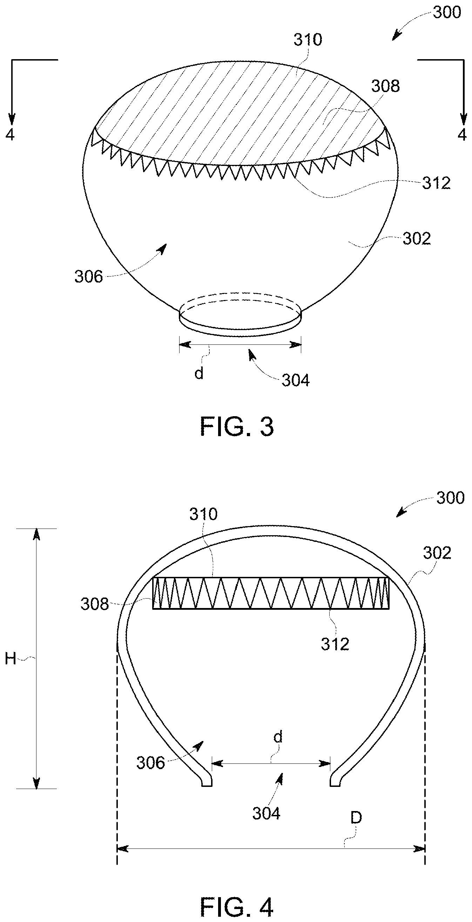

FIG. 3 shows an exemplary embodiment of a light diffusing assembly 300. FIG. 4 illustrates a side cross-sectional view taken along line 4-4 of FIG. 3. In FIG. 3, the light diffusing assembly 300 is suitable for use as part of a lamp (e.g., lamp 100 and lamp 200 of FIGS. 1 and 2, respectively). The light diffusing assembly 300 has optical characteristics that can disperse light to cause the lamp to create the intensity distributions discussed above. In the perspective view of FIG. 3, the light diffusing assembly 300 has an envelope 302 with a spheroid geometry that terminates at an opening 304. The envelope 302 is hollow, thus forming an interior volume 306. A reflector 308 is disposed in the interior volume 306. The reflector 308 can have a top 310 and a bottom 312. Collectively, the configuration of the envelope 302 and the reflector 308 forms one or more active optical areas, which include a transmissive outer area formed by all and/or part of the envelope 302 and a reflective area formed, at least in part, by the reflector 308. In one embodiment, the reflector 308 permits little or no light to pass to the transmissive outer area, e.g., to the top portion of the envelope 302.

The top 310 of the reflector 308 may be coated with a reflective material (e.g., silver foil) in order to further reduce the amount of light that passes through the reflector 308. In one embodiment, the reflector 308 is configured to reflect light so the trajectory of the reflected light has a latitudinal value (e.g., latitudinal value θ of FIG. 1) in the range of ninety degrees (90°) to one hundred eighty degrees (180°).

The opening 304 provides access to the interior volume 306 of the envelope 302. The opening 304 has a diameter d that, in one example, is sized and configured to fit about a light source (e.g., light source 114, 214 of FIGS. 1 and 2) when the light diffusing assembly 300 is in position on a lamp (e.g., lamp 100, 200 of FIGS. 1 and 2). In one example, the light diffusing assembly 300 is configured so that the light source sits outside of and/or on the periphery of the majority of the interior volume 306.

In the cross-section of FIG. 4, the light diffusing assembly 300 is shown to have a contour and dimensions (e.g., a height dimension H and an outer diameter D) that define the curvilinear features of the spheroid geometry. The reflector 308 functions to reflect light mostly through the transmissive outer areas of the envelope 302 rather than back to and/or through the opening 304. The diameters (e.g., diameter D and diameter d) along with the optical properties of the envelope 302 that defines the transmissive outer area and the reflector 308 determine the intensity distribution of embodiments of the lamps contemplated herein. Examples of the transmissive outer area predominantly allow light to transmit from the interior volume 306 out through the envelope 302. However, the transmissive outer area and the reflector 308 may also exhibit combinations of light-reflecting and/or light-transmitting properties to provide intensity distributions consistent with the look and feel of incandescent light bulbs as well as to meet the various industry standards discussed herein. In one example, the intensity distribution of light through the transmissive outer area is significantly greater than the intensity distribution of light passing through the reflector 308.

Variations in the contour of the envelope 302 can influence the intensity distribution the light diffusing assembly 300 exhibits (e.g., by defining the features of the spheroid geometry in the transmissive outer area). In one example, the spheroid geometry of the light diffusing assembly 300 has a generally flatter shape than a sphere, e.g., having a shape of an oblate spheroid, thus creating the flattened (or substantially flattened) top and peripheral radial curvatures as shown in FIG. 4.

Examples of the envelope 302 of the light diffusing assembly 300 may be formed monolithically as a single unitary construction or as components that are affixed together. Materials, desired optical properties, and other factors (e.g., cost) may dictate the type of construction necessary to form the geometry (e.g., the spheroid geometry) of the light diffusing assembly 300. In another exemplary embodiment, the light diffusing assembly 300 has a multi-component construction in which the spheroid geometry can be approximated by a discrete number of planar sheet diffusers assembled in an axisymmetric arrangement following the surface of a spheroid. In certain embodiments, sheet diffusers are utilized because the sheet diffusers can exhibit potentially high diffusion of light with relatively low loss or absorption of light compared with monolithically-formed, three-dimensional diffusers. Multi-component structures can exhibit the same optical properties as the diffusive envelope 302 discussed above (e.g., land, thus, embodiments of the lamp (e.g., lamp 100, 200 of FIGS. 1 and 2) of this disclosure can exhibit the same distribution pattern with similar intensity distribution as discussed in connection with the lamp 100 above. However, multi-component structures may permit complex geometries not necessarily amenable to certain materials and/or processes including monolithic formations of the diffuser as discussed herein.

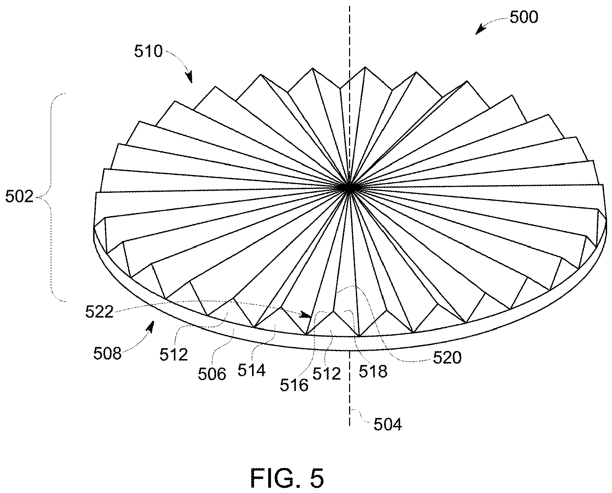

FIGS. 5, 6, 7, 8, and 9 illustrate an exemplary reflector 500 suitable for use as the reflectors 124, 224 of FIGS. 1 and 2 and reflector 308 of FIGS. 3 and 4. FIG. 5 depicts a perspective view of the reflector 500. The reflector 500 has a body 502 with a central axis 504 and an outer peripheral edge 506. The body 502 has a first side 508 and a second side 510 that correspond to, respectively, the bottom and the top in the embodiments of FIGS. 1, 2, 3, and 4. The body 502 includes a plurality of facets (e.g., a first facet 512 and a second facet 514) disposed circumferentially about the central axis 504. The facets 512, 514 have an exterior facet profile with a pair of opposing faces (e.g., a first face 516 and a second face 518) that form a facet edge 520 on the second side 510 of the reflector 500. In one embodiment, the first face 516 and the second face 518 of the facets 512, 514 are configured to reflect a first amount of light emitted by the light source back to a first portion of the envelope (e.g., envelope 116, 216 of FIGS. 1 and 2) and to refract a second amount of light emitted by the light source to a second portion of the envelope (e.g., envelope 116, 216 of FIGS. 1 and 2). In one example, the first portion is subjacent (and/or closer to the light source) to the second portion along the optical axis. As also shown in FIG. 5, the faces 516, 518 of adjacent facets 512, 514 can form a valley 522.

Examples of the reflector 500 can be rotationally symmetric, wherein the exterior facet profile and other features are substantially the same for all of the facets (e.g., facets 512, 514) that make up the body 502. In one example, the number of facets (e.g., facets 512, 514) is in the range of about twenty to about forty, although dimensions and other factors (e.g., optical properties) can cause the number of facets 512, 514 to increase and decrease, as desired. As shown in FIG. 5, the facets 512, 514 are generally equally spaced about the central axis 504. However, this disclosure does contemplate other configurations of the reflector 500 in which the distance between adjacent facets 512 (e.g., as measured between the facet edge 520 on adjacent facets 512) varies across the construction of the body 502. In one example, the first side 508 forms a surface that is substantially flat and smooth and, thus, exhibits no or very weak optical properties. Moreover, as set forth in some examples below, the construction of the body 502 can incorporate shapes and features that cause the first side 508 and the second side 510 to form convex, concave, and otherwise non-uniform surfaces, e.g., from the outer peripheral edge 506 towards the central axis 504.

The valleys 522 can have various shapes and forms that can influence the optical properties of the reflector 500. In one example, the end of first face 514 and the end of second face 516 meet at a point (or substantially sharp interface) that forms the valley 522 into a "V" shape. In other examples, the valley 522 includes a flat segment and/or radial segment that mates with the end of the first face 514 and the end of the second face 516. This configuration forms the valley 522 with a flat bottom or, in the case of the radial segment, with a "U" shape. The dimensions of the flat segment (and radial segment) can be minimized to achieve an acceptable level of performance and internal reflection from the reflector 500. Likewise, in one embodiment, the exterior facet profile can be rounded along at least a portion of the facet edge 520, wherein such rounding may result from manufacturing, finishing, and/or polishing processes. However, the radii of such rounded peaks should be minimized in order to achieve acceptable performance and internal reflection from the reflector 500.

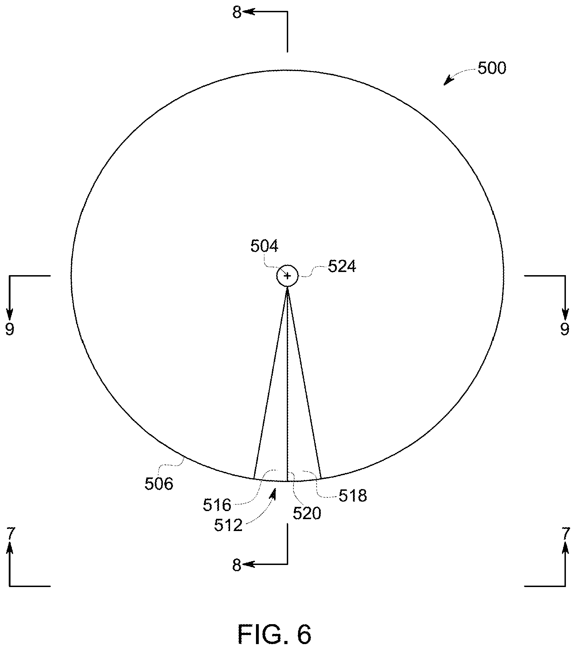

FIG. 6 depicts a top view of the reflector 500 with only the facet 512 in view to focus the discussion hereinbelow on one exemplary construction of the facets of the reflector 500. In particular, the example of FIG. 6 illustrates that the facet edge 520 extends from the outer peripheral edge 506 towards the central axis 504. The facet edge 520 terminates at an aperture 524, which is coaxial with the central axis 504 and extends through the body 502. This configuration of the aperture 524 represents an area of the body 502 where material is missing. In some examples, the reflector 500 may include an element that covers all and/or part of the aperture 524. This element may form a dome, flat, or other shape as necessary to promote appropriate optical properties of the reflector 500.

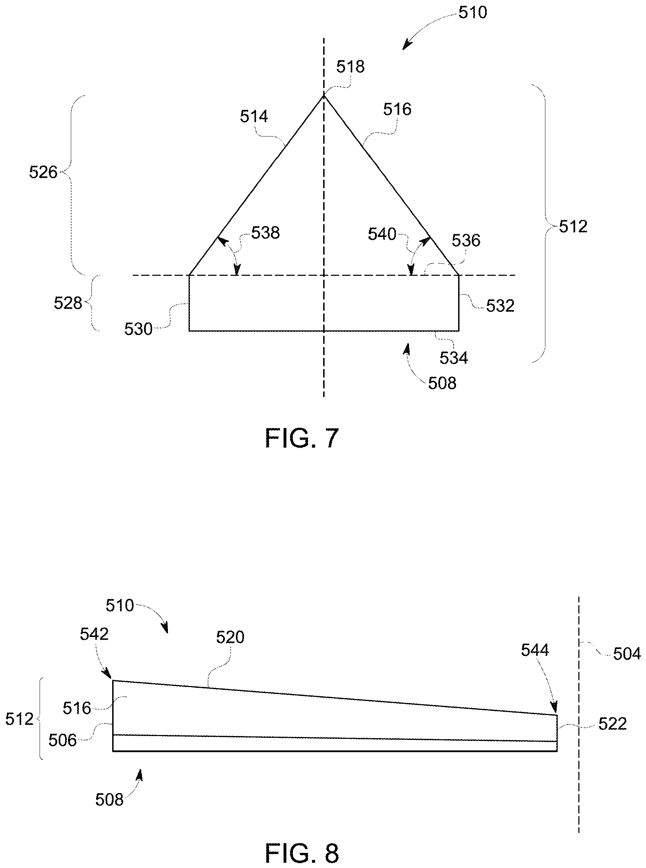

As best shown in FIG. 7, which is a front view of the facet 512 of FIG. 6 taken at line 7-7, the exterior facet profile has an upper form factor (e.g., a triangular form factor 526) and a lower form factor (e.g., a rectangular form factor 528). The triangular form factor 526 includes the first face 514, the second face 516, and the facet edge 520. The rectangular form factor 528 includes a pair of parallel sides (e.g., a first parallel side 530 and a second parallel side 532) and a bottom side 534, which in one example is formed by the bottom surface of the reflector 500. The exterior facet profile also includes a mating boundary, shown in phantom lines and generally designated by the numeral 536. The mating boundary 536 defines a geometric plane between the ends of the first face 516 and the second face 518.

In one example, the mating boundary 536 represents the interface between the triangular form factor 526 and the rectangular form factor 528. A first angle 538 and a second angle 540 define the angle created between the mating boundary 536 and the first face 516 and the second face 518, respectively. In one example, the first angle 538 and the second angle 540 are substantially equal. This disclosure also contemplates examples of the exterior facet profile in which the first angle 538 and the second angle 540 have a value in the range of about 45° to about 55°, and in one particular configuration the value is about 50°. In other examples, the first angle 538 is different from (e.g., greater than and/or less than) the second angle 540.

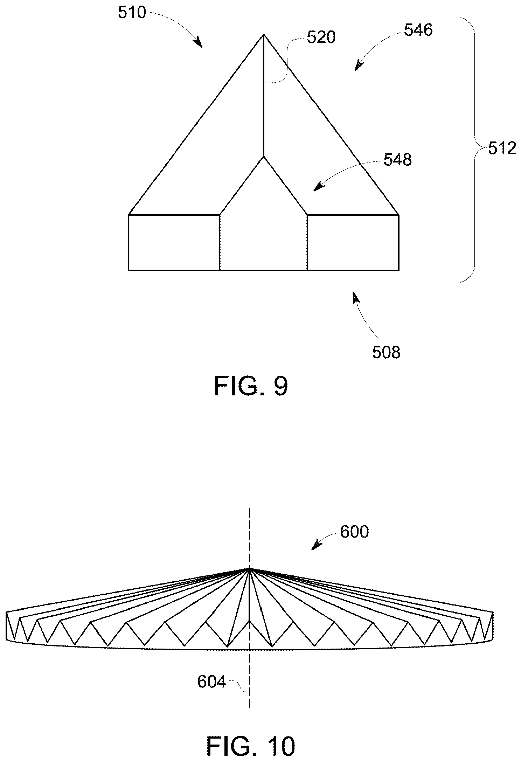

FIGS. 8 and 9 show views of the facet 512 taken at, respectively, line 8-8 and line 9-9 of FIG. 6. In the example of FIG. 8, which is a side, cross-section view, the facet 512 has a first end 542, proximate the outer peripheral edge 506, and a second end 544 proximate the aperture 522. The facet edge 520 has a slope which changes from the first end 542 to the second end 544. The extent and/or degree to which the facet edge 520 slopes depends, in one example, on the change in the exterior facet profile from the first end 542 to the second end 544. The outer exterior profile of the facet 512 can remain constant, i.e., the first angle 538 and the second angle 540 in FIG. 7 have the same value from the first end 542 to the second end 544. In other examples, and as best shown in FIG. 9, the facet 512 can have a first exterior facet profile 546 (also, "first profile 546") and a second exterior facet profile 548 (also "second profile 548"), wherein the ratio of the first profile 546 to the second profile 548 controls the degree of slope of the facet edge 520. The ratio can have a value in the range of about 1 to about 3, although this disclosure contemplates other configurations in which the ratio falls outside of this range. Modifications in the ratio can change the height of the facet 512 across the facet edge 520 from the first end 542 to the second end 544. In FIG. 9, for example, the first profile 546 is dimensionally larger than the second profile 548. This configuration causes the facet edge 520 will slope or grade downwardly (e.g., in a direction from the first side 508 toward the second side 510) as the facet edge approaches the center axis 504. In other examples, the first profile 546 is dimensionally smaller than the second profile 548, thus causing the facet edge 520 to slope or grade upwardly (e.g., in a direction from the first side 508 toward the second side 510).

As set forth above, the reflector 500 can exhibit optical properties that are similar to TIR lenses that do not require any secondary processing such the application of a reflective coating, treatment, or layer to any of the surfaces of the reflector 500. In one embodiment, the reflector 500 consists of a single unitary piece in order to facilitate ease of manufacture and to help reduce costs and expenses related to the manufacture of the reflector 500. In another embodiment, a reflective coating or layer (e.g., silver foil or metallic paint) may be selectively applied to the top surfaces of the reflector 500, e.g., along the edge 520 of the facets 512 and/or the central aperture 524. This reflective coating can reduce the amount of light emitted from a light source (e.g., the light source 114, 214 (FIGS. 1 and 2)) that passes through the reflector 500 and continues subsequently through the upper portion of a lamp (e.g., the lamp 100, 200 (FIGS. 1 and 2) and/or of a light diffusing assembly (e.g., light diffusing assembly 110, 210, 310 (FIGS. 1, 2, and 3)).

The following examples further illustrate alternate configurations and designs for reflectors 124, 224 of FIGS. 1 and 2, reflector 308 of FIGS. 3 and 4, and reflector 500 of FIGS. 5, 6, 7, 8, and 9.

### EXAMPLES

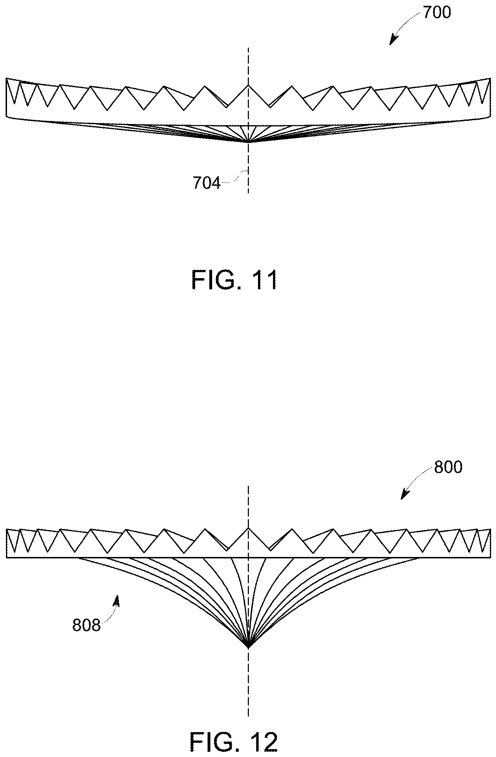

FIGS. 10, 11, 12, and 13 illustrate various form factors and constructions for embodiments of reflectors this disclosure contemplates herein. Examples of reflector 600 and 700 of FIGS. 10 and 11 having a conical reflector shape. In FIG. 10, the reflector 600 has an upward conical shape that may result when the center point of the outer profile (e.g., outer profile 546 of FIG. 9) is offset, or moved downwardly, along the axis 604 relative to the inner profile (e.g., inner profile 548 of FIG. 9). The reflector 700 of FIG. 7 has a downward conical shape that may result when the center point of the outer profile (e.g., outer profile 546 of FIG. 9) is offset, or moved upwardly, along the axis 704 relative to the inner profile (e.g., inner profile 548 of FIG. 9). FIG. 12 illustrates another configuration for the reflector 800 in which the surface at the bottom 808 of the reflector 800 can form a conical shape with curved and/or curvilinear features.

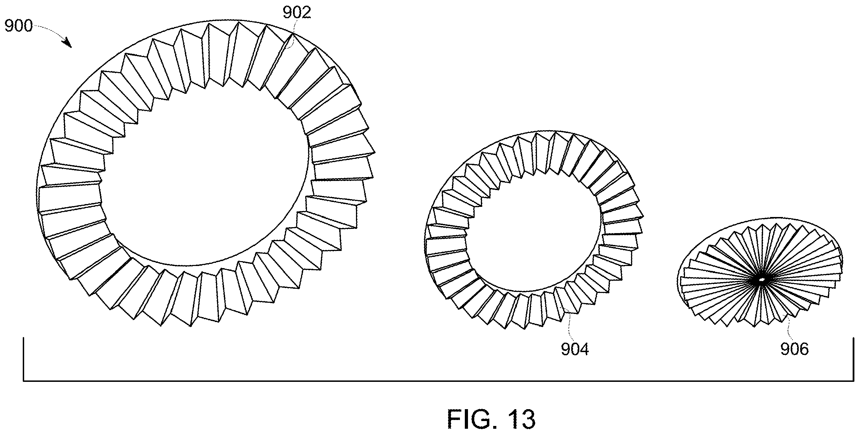

FIG. 13 depicts an exploded view of an exemplary construction of a reflector 900. This construction utilizes multiple pieces (e.g., a first piece 902, a second piece 904, and a third piece 906) to form the facets of the reflector 900. These multiple pieces can form one or more annular rings (e.g., the first piece 902 and the second piece 904) and an inner disc (e.g., the third piece 906). In one example, each of the pieces 902, 904, 906 include facets that conform to the features disclosed herein. In one embodiment, assembly of the pieces 902, 904, 906 together complete the structure of the reflector 900 and, accordingly, form the facets that are useful to manipulate light as required for use in the lamps.

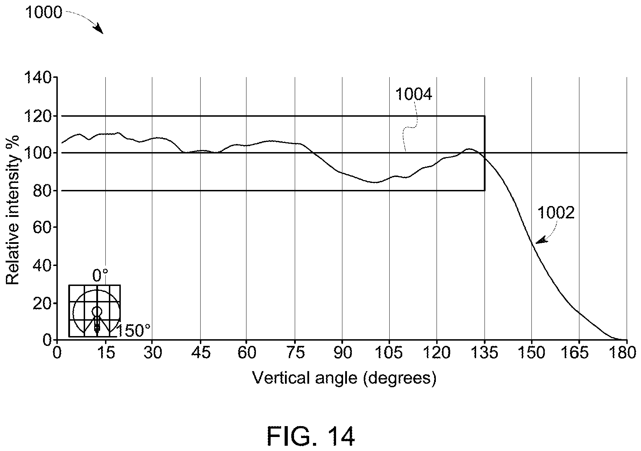

FIG. 14 illustrates a plot 1000 of an optical intensity distribution profile 1002 (or "optical intensity" profile 1002). Data for the plot 1000 was gathered using from an embodiment of the lamp having a reflector substantially similar to the reflector shown in FIGS. 5, 6, 7, 8, and 9 and described above. As the optical intensity profile 1002 illustrates, the lamp achieves a mean optical intensity 1004 of approximately 100 ± 20 % at a latitudinal co-ordinate up to at least one hundred thirty-five degrees (135°).

As used herein, an element or function recited in the singular and proceeded with the word "a" or "an" should be understood as not excluding plural said elements or functions, unless such exclusion is explicitly recited. Furthermore, references to "one embodiment" of the claimed invention should not be interpreted as excluding the existence of additional embodiments that also incorporate the recited features.

This written description uses examples to disclose embodiments of the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A lamp (100), comprising:
an envelope (116) forming an interior volume (122); and
reflector (124,500) disposed in the interior volume (122), the reflector (124,500) comprising at least one facet (512,514) having a first end (542) and a second end (544) proximate, respectively, an outer peripheral edge (506) and a center axis (504) of the reflector (500), the facet having an exterior facet profile with a first face (516), a second face (518) opposing the first face (516), and a facet edge (520) disposed therebetween, wherein the first face (516) and the second face (518) are configured to at least partially reflect light, wherein the reflector (500) has an aperture (522) that is coaxial with the center axis (504), and wherein the reflector (500) comprises an element that covers at least part of the aperture.

2. The lamp (100) of claim 1, wherein the exterior facet profile comprises a first form factor (526) in which the first face (516) and the second face (518) form the sides of a triangle.

3. The lamp (100) of claim 1 or 2, wherein the first face (516) forms a first angle and the second face (518) forms a second angle with a geometric plane that extends between an end of the first face (516) and an end of the second face (518), and wherein the first angle (538) and the second angle (540) have the same value, wherein the value is in the range of 40° to 55°.

4. The lamp (100) of any of claims 1 to 3, wherein the exterior facet profile (546) comprises a first profile at a first end (542) of the facet (512,514) and a second profile (548) at a second end (544) of the facet, wherein the first profile (546) is dimensionally larger than the second profile (548).

5. The lamp (100) of claim 4, wherein the ratio of the first profile (546) to the second profile (548) is 1 or greater.

6. The lamp (500) of any preceding claim, wherein the reflector (500) has an outer peripheral edge (506), and wherein the facet edge (520) tapers from the outer peripheral edge (506) toward the center axis (504).

7. The lamp (100) of any preceding claim, further comprising a light source (114,214) with an optical axis that aligns with the center axis (504) of the reflector (500), wherein the reflector (500) is spaced apart from the light source (114,214) and spaced apart from a top portion of the envelope (116,216) along the center axis (504).

8. The lamp (100) of claim 7, wherein the light source is a light-emitting diode device; and further comprising:
a heat dissipating assembly with a heat dissipating element (230) spaced apart from the outer surface (218) of the envelope (216) forming an air gap.

9. The lamp (100) of claim 8, wherein the reflector (500) forms an internal reflection lens.

10. The lamp (100) of claim 8 or claim 9, comprising:
a first facet (512) and a second facet (514) that is adjacent the first facet (512), and wherein the first face (516) of the first facet (512) and the second face (518) of the second facet (514) form a valley (522) therebetween.

11. The lamp (100) of claim 10, wherein an end of the first face (516) of the first facet (512) and an end of the second face (518) of the second facet (514) meet at a point to form the valley (522).

12. The lamp (100) of any of claims 8 to 11, wherein the first face (516) and the second face (518) of the facets (512,514) are configured to reflect a first amount of light emitted by the light source (114,214) back to a first portion of the envelope (116,216) and to refract a second amount of light emitted by the light source (114,214) to a second portion of the envelope (116,216), wherein the first portion is subjacent to the second portion along the optical axis.

13. The lamp (100) of any preceding claim, wherein the first face (516) and the second face (518) form sides of a triangle.

## Patentansprüche

1. Eine Leuchte (100), umfassend:
einen Kolben (116), der ein Innenvolumen (122) bildet; und
einen Reflektor (124, 500), der im Innenvolumen (122) angeordnet ist, der Reflektor (124, 500) mindestens eine Facette (512, 514) umfassend, die ein erstes Ende (542) und ein zweites Ende (544), jeweils unmittelbar neben einer äußeren Umfangskante (506) und einer Mittelachse (504) des Reflektors (500), aufweist, wobei die Facette ein äußeres Facettenprofil mit einer ersten Fläche (516), einer zweiten Fläche (518), die der ersten Fläche (516) gegenüberliegt, und einer Facettenkante (520), die dazwischen angeordnet ist, aufweist, wobei die erste Fläche (516) und die zweite Fläche (518) konfiguriert sind, mindestens teilweise Licht zu reflektieren, wobei der Reflektor (500) eine Blende (522) aufweist, die koaxial zur Mittelachse (504) verläuft, und wobei der Reflektor (500) ein Element umfasst, das mindestens einen Teil der Blende bedeckt.

2. Die Leuchte (100) nach Anspruch 1, wobei das äußere Facettenprofil einen ersten Formfaktor (526) umfasst, in dem die erste Fläche (516) und die zweite Fläche (518) die Seiten eines Dreiecks bilden.

3. Die Leuchte (100) nach Anspruch 1 oder 2, wobei die erste Fläche (516) einen ersten Winkel und die zweite Fläche (518) einen zweiten Winkel mit einer geometrischen Ebene bildet, die sich zwischen einem Ende der ersten Fläche (516) und einem Ende der zweiten Fläche (518) erstreckt, und wobei der erste Winkel (538) und der zweite Winkel (540) denselben Wert aufweisen, wobei der Wert im Bereich von 40° bis 55° liegt.

4. Die Leuchte (100) nach einem der Ansprüche 1 bis 3, wobei das äußere Facettenprofil (546) ein erstes Profil an einem ersten Ende (542) der Facette (512, 514) und ein zweites Profil (548) an einem zweiten Ende (544) der Facette umfasst, wobei das erste Profil (546) dimensional größer als das zweite Profil (548) ist.

5. Die Leuchte (100) nach Anspruch 4, wobei das Verhältnis des ersten Profils (546) zum zweiten Profil (548) 1 oder größer ist.

6. Die Leuchte (500) nach einem der vorhergehenden Ansprüche, wobei der Reflektor (500) eine äußere Umfangskante (506) aufweist, und wobei die Facettenkante (520) von der äußeren Umfangskante (506) zur Mittelachse (504) hin spitz zuläuft.

7. Die Leuchte (100) nach einem der vorhergehenden Ansprüche, ferner eine Lichtquelle (114, 214) mit einer optischen Achse, die mit der Mittelachse (504) des Reflektors (500) fluchtend ist, umfassend, wobei der Reflektor (500) von der Lichtquelle (114, 214) beabstandet ist und von einem oberen Abschnitt des Kolbens (116, 216) entlang der Mittelachse (504) beabstandet ist.

8. Die Leuchte (100) nach Anspruch 7, wobei die Lichtquelle eine Leuchtdiodenvorrichtung ist; und ferner umfassend:
eine Wärmeableitanordnung mit einem Wärmeableitelement (230), das von der Außenfläche (218) des Kolbens (216) beabstandet ist, wobei es einen Luftspalt bildet.

9. Die Leuchte (100) nach Anspruch 8, wobei der Reflektor (500) eine innere Reflexionslinse bildet.

10. Die Leuchte (100) nach Anspruch 8 oder Anspruch 9, umfassend:
eine erste Facette (512) und eine zweite Facette (514), die zur ersten Facette (512) benachbart angeordnet ist, und wobei die erste Fläche (516) der ersten Facette (512) und die zweite Fläche (518) der zweiten Facette (514) dazwischen ein Tal (522) bilden.

11. Die Leuchte (100) nach Anspruch 10, wobei sich ein Ende der ersten Fläche (516) der ersten Facette (512) und ein Ende der zweiten Fläche (518) der zweiten Facette (514) an einem Punkt treffen, um das Tal (522) zu bilden.

12. Die Leuchte (100) nach einem der Ansprüche 8 bis 11, wobei die erste Fläche (516) und die zweite Fläche (518) der Facetten (512, 514) konfiguriert sind, eine erste Lichtmenge, die von der Lichtquelle (114, 214) ausgestrahlt wird, zurück zu einem ersten Abschnitt des Kolbens (116, 216) zu werfen und eine zweite Lichtmenge, die von der Lichtquelle (114, 214) ausgestrahlt wird, zu einem zweiten Abschnitt des Kolbens (116, 216) abzulenken, wobei der erste Abschnitt unterhalb des zweiten Abschnitts entlang der optischen Achse liegt.

13. Die Leuchte (100) nach einem der vorhergehenden Ansprüche, wobei die erste Fläche (516) und die zweite Fläche (518) Seiten eines Dreiecks bilden.

## Revendications

1. Lampe (100) comprenant :
une enveloppe (116) formant un volume interne (122) ; et
un réflecteur (124, 500) disposé dans le volume interne (122), le réflecteur (124, 500) comprenant au moins une facette (512, 514) possédant une première extrémité (542) et une seconde extrémité (544) proche, respectivement, un bord périphérique externe (506) et un axe central (504) du réflecteur (500), la facette comprenant un profil de facette externe avec une première face (516), une seconde face (518) opposée à la première face (516), et un bord de facette (520) disposé entre elles, dans laquelle la première face (516) et la seconde face (518) sont configurées pour réfléchir au moins partiellement la lumière, dans laquelle le réflecteur (500) comprend une ouverture (522) qui est coaxiale avec l'axe central (504), et dans laquelle le réflecteur (500) comprend un élément qui couvre une partie au moins de l'ouverture.

2. Lampe (100) selon la revendication 1, dans laquelle le profil de facette externe comprend un premier facteur de forme (526) dans lequel la première face (516) et la seconde face (518) forment les côtés d'un triangle.

3. Lampe (100) selon les revendications 1 ou 2, dans laquelle la première face (516) forme un premier angle et la seconde face (518) forme un second angle par rapport à un plan géométrique qui s'étend entre une extrémité de la première face (516) et une extrémité de la seconde face (518), et dans laquelle le premier angle (538) et le second angle (540) ont la même valeur, dans laquelle la valeur se situe dans une plage de 40° à 55°.

4. Lampe (100) selon l'une quelconque des revendications 1 à 3, dans laquelle le profil de facette externe (546) comprend un premier profil à une première extrémité (542) de la facette (512, 514) et un second profil (548) à une seconde extrémité (544) de la facette, dans laquelle le premier profil (546) possède des dimensions plus importantes que le second profil (548).

5. Lampe (100) selon la revendication 4, dans laquelle le rapport entre le premier profil (546) et le second profil (548) est de 1 ou plus.

6. Lampe (500) selon l'une quelconque des revendications précédentes, dans laquelle le réflecteur (500) comprend un bord périphérique externe (506), et dans laquelle le bord de facette (520) va en se rétrécissant depuis le bord périphérique externe (506) vers l'axe central (504).

7. Lampe (100) selon l'une quelconque des revendications précédentes, comprenant en outre une source de lumière (114, 214) avec un axe optique qui s'aligne avec l'axe central (504) du réflecteur (500), dans laquelle le réflecteur (500) est espacé de la source de lumière (114, 214) et est espacé d'une partie supérieure de l'enveloppe (116, 216) le long de l'axe central (504).

8. Lampe (100) selon la revendication 7, dans laquelle la source de lumière est un dispositif à diode électroluminescente, et comprenant en outre :
un système de dissipation de chaleur avec un élément de dissipation de chaleur (230) espacé de la surface externe (218) de l'enveloppe (216) en formant un espace d'air.

9. Lampe (100) selon la revendication 8, dans laquelle le réflecteur (500) forme une lentille de réflexion interne.

10. Lampe (100) selon les revendications 8 ou 9, comprenant :
une première facette (512) et une seconde facette (514) qui est adjacente à la première facette (512), et dans laquelle la première face (516) de la première facette (512) et la seconde face (518) de la seconde facette (514) forment une vallée (522) entre elles.

11. Lampe (100) selon la revendication 10, dans laquelle une extrémité de la première face (516) de la première facette (512) et une extrémité de la seconde face (518) de la seconde facette (514) se rejoignent en un point pour former la vallée (522).

12. Lampe (100) selon l'une quelconque des revendications 8 à 11, dans laquelle la première face (516) et la seconde face (518) des facettes (512, 514) sont conçues pour réfléchir une première quantité de lumière émise par la source de lumière (114, 214) en retour vers une première partie de l'enveloppe (116, 216) et pour réfracter une seconde quantité de lumière émise par la source de lumière (114, 214) vers un second point de l'enveloppe (116, 216), dans laquelle la première partie est sous-jacente à la seconde partie de long de l'axe optique.

13. Lampe (100) selon l'une quelconque des revendications précédentes, dans laquelle la première face (516) et la seconde face (518) forment les côtés d'un triangle.
